# EUROPEAN PATENT SPECIFICATION

(11) **EP 0 806 153 B1**
(45) Date of publication and mention of the grant of the patent: **03.01.2001**
(21) Application number: 96201249.8
(22) Date of filing: 10.05.1996
(51) Int. Cl.: A23L 3/02, B65H 23/188

(54) **Tank and process for heat treatment of packages comprising food material**
Becken und Verfahren zur Hitzebehandlung von Nahrungsmitteln enthaltenden Behältern
Cuve et procédé pour le traitement thermique d'emballages contenant des produits alimentaires

(43) Date of publication of application: 12.11.1997
(73) Proprietor: SOCIETE DES PRODUITS NESTLE S.A., 1800 Vevey (CH)
(72) Inventor: Broberg, Lars, 26392 Jonstorp (SE); Leonhardt, Werner, 265 31 Astorp (SE)
(74) Representative: Pate, Frederick George

(56) References cited:
- BE-A- 640 791
- US-A- 3 464 835
- US-A- 4 202 476

## Description

The present invention relates to a process and a tank for heat treatment of bands of packages. The invention also relates to the use of a tank for heat treatment of bands of packages containing food material.

Heat treatment such as in-pack pasteurising or sterilisation of packages containing food product are used in the food industry for the reduction of micro biologic activity in the food product and to increase the life of the product. Such an in-pack heat treatment takes place once the product is sealed off within the package.

Conventionally, the product to be heat treated is packed in individually separate packages. Continuous packaging machines such as Multivac™ and Flowwrap machines are used in the production of separate individual packages which are not joined together. In these machines packages are shaped from film or foil, then filled, sealed and cut to release the package from packaging material supply. The package is then ejected from the packaging machine and transported to the heat treatment apparatus. In these continuous packing machines the separation of the individual packages from abutting packing material is carried out while the package is in the machine, e.g. at the same time as the sealing of the package as its position is then well defined.

It is known to heat treat individually the packed packages in pasteurising tunnels wherein they are subjected to hot air or steam. Such pasteurising tunnels suffer, however, from the serious drawback of being very space demanding. Another possibility is to pasteurise the packages by conveying them through hot water. To do this, it is necessary to hold the packages below surface of the water they will otherwise tend to float due to the air captured in the packages. For example, this is done by means of a conveyor system wherein packages are positioned between two parallel running conveyors or held to a single conveyor by attachment means. To reduce the space required the conveyors advantageously run along zigzag paths. However, conveyor belts are expensive, and easily become worn or broken especially when travelling through hot water.

U.S. Patent 3,464,835 relates to a process for pasteurizing liquid products comprising a succession of sachets of flexible material in an uninterrupted line, the process comprising the operation of passing the line of sachets along an undulating path of travel in successive treatment zones by exerting traction on the line of sachets, and circulating a treatment liquid in the treatment zones to cause the liquid product in the sachets to be heated and undergo pasteurization treatment as the sachets pass through the zones.

We have now devised a process and a tank for heat treatment of packages which may be used to overcome the above described problems. In the process and tank according to the invention it has been found that advantages can be obtained if contrary to the normal practice of separating the packages from one another they are kept together in a continuous band of packages and this band acts as its own conveyor. The present invention may have among other things the following advantages:
- Elimination of the need for conveyor belts.
- A compact design.
- Good heat transfer due to the direct contact with the hot medium.
- Less deformation of packages resulting from heating of the content due to the counter pressure of the water.
- Constant stretched band of packages preventing breakage thereof.
- Flexibility to the shape of the heat treated packages.
- Easy loading system.

Accordingly in a first aspect, the invention relates to a tank for heat treatment of packages comprising food material attached to one another in a band, said tank comprises at least one substantially stationary roller and at least one movable roller capable of being moved reciprocally vertically from a position above to a position below the substantially stationary roller.

With the present tank for heat treatment the need for supportive conveyors for the transportation and fixation of the package is eliminated. The band of packages is self supportive, acts as its own conveyor and is trained below and above the rollers in a zigzag course. The zigzag course allows for a compact design of the tank.

For heat treatment, the tank is filled with hot or boiling water and means for heating the water is provided. Heat treatment by passing the packages through water gives, as described above, a good heat transfer due to the direct contact between the package and the water. The water heating may also give longer lasting package weldings than what can be obtained when heating a package in hot air. The hot air expansion of the content of the package results in a temporary deformation of the package. The heat treatment in water further has the advantage of substantially eliminating the weight of the packages while they are being transported through the water. This allows the band to be trained vertically without any risk of breakage of band or package.

The tank according to the invention is suitable for in-pack heat treatment such as pasteurising, sterilisation and cooking of food products in packages in bands. The packages may e.g. be in form of a tray with sealed lids or pouches, the packages being joined so as to form a band of packages. The band may conveniently be e.g. a single column of packages or a matrix of rows of two or more packages attached to one another. Materials suitable for such packages are plastic film or foil, e.g. polyethylene, polypropylene etc.

Preferably, there are more than one substantially stationary and movable rollers positioned alternately, all the movable rollers being adapted to ascend or descend simultaneously.

The walls of the tank are conveniently provided with guiding means which are adapted to guide the shafts of the movable rollers as they reciprocate. Means may be provided to adjust the lower end position of the movable roller to the desired heat treatment time by thus adjusting the length of the course through the hot water.

In one advantageous embodiment of the invention the substantially stationary roller and/or the movable roller are/is provided with indentations for the engagement with a package while it is being trained around the roller.

In another advantageous embodiment of the invention the substantially stationary roller and/or the movable roller are/is provided with projections along its periphery. For this embodiment the band of packages may be provided with openings in rim areas on both sides of the band for the engagement with said projections.

For an easy separation of the package from each other after the end of the heat treatment, weakening lines are provided between the packages. Due to the sensitive control system it is possible to control the stretching of the band and thus prevent any premature tearing of the band. Furthermore, such weakening lines makes it easy to separate the packages without need for precise orientation and fixation of the packages such as is needed for separation by cutting.

In a preferred embodiment the tank is provided with a control system to ensure a stretching of the band of packages without any premature separation of the packages. The control system comprises the substantially stationary roller having a density less than 1.0 which is guided to allow a certain small movement upwards and downwards, and at least one sensor device adapted to automatically adjust the speed of the bands of packages, depending on the position of the substantially stationary roller. It follows from the density of the roller that it is floatable in water and thus will provide a slight upward pressure upon the band of packages.

The tank may be positioned subsequent to the packing machine producing the band of packages, in such a case the speed of the band in the tank can be adjusted by adjusting the speed of the packages ejected from it.

The control system may be digital or analogous. For example, in a digital control system an inductive sensor is adapted to detect the position of a substantially stationary roller. In a digital control system, the sensor may be positioned in at least one groove guiding the shaft whereas in an analogous control system an analogous sensor measures the rotation of a wheel which is connected to a roller by means of a taut wire.

In order to ease loading of the band of packages the tank is conveniently provided with inlet and outlet means for the band in the side wall, preferably at a position between the stationary rollers and the movable rollers when in their upper position. Due to the packages floating ability the band is conveniently drawn across the tank between the stationary rollers and the movable rollers. These movable rollers subsequently reciprocate from their upper position to their lower position after which the continuous process of heat treating the band during its course through the tank can begin. Outside the tank conveyors or other supports may be provided for the support and transport of the packages to be heat treated.

It is preferred that the band comprises a leading end wherein no food material is encapsulated. This is to be used for the loading of the band so as to secure that the packed food material is allowed a sufficiently long time in the hot or boiling water for the heat treatment to be adequate.

In a second aspect, the present invention provides a process for heat treating packages comprising food material wherein the packages are attached to one another in a band, said process comprising conveying the band of pouches through a tank by passing the band beneath at least one vertically movable roller and above at least one substantially stationary roller, and moving the movable roller downwards to a position below the substantially stationary roller to cause the band to travel in a substantially vertical zigzag course through the water.

The invention also relates to the use of the tank for heat treatment of a band of packages.

The present invention will now be illustrated by way of example only with reference to the accompanying drawings in which
Fig. 1 is a side sectional view of a tank according to the invention with the movable rollers in their upper position and wherein a band of package is ready to be loaded,
Fig. 2 is a side sectional view of a tank according to the invention in operation with the movable rollers in their lower position,

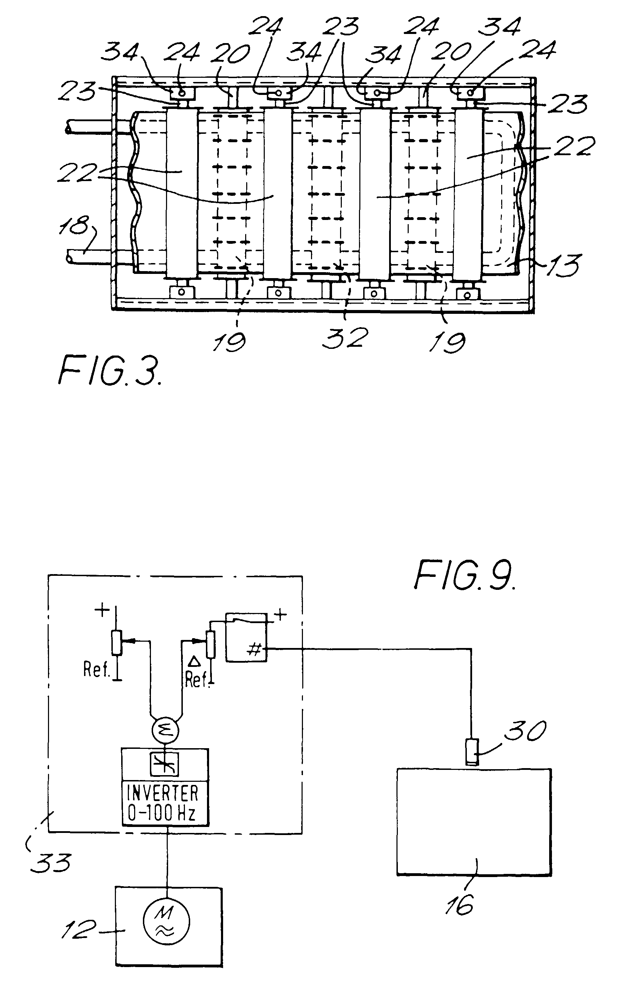

Fig. 3 is a top view of Fig. 2 looking in the direction of the arrows I-I,
Fig. 4 is a side sectional view of a tank according to the invention showing a control mechanism.
Fig. 5 is a sectional view through one of the walls of the tank showing guiding means for the movable roller,
Fig. 6 is a view of Fig. 5 along the line I-I looking in the direction of the arrows,
Fig. 7 is a sectional view through a wall of the tank showing detail of a control system,
Fig. 8 is a view of Fig. 7 along line II-II looking in the direction of the arrows,
Fig. 9 is a schematic view of the control system,
Fig. 10 is a sectional view of Fig. 1 along the line III-III looking in the direction of the arrows to show an alternative control mechanism,
Fig. 11 is a sectional view along the line IV-IV of Fig. 10 looking in the direction of the arrows, and
Fig. 12 is a schematic view of the alternative control system shown in Figs. 10 and 11.

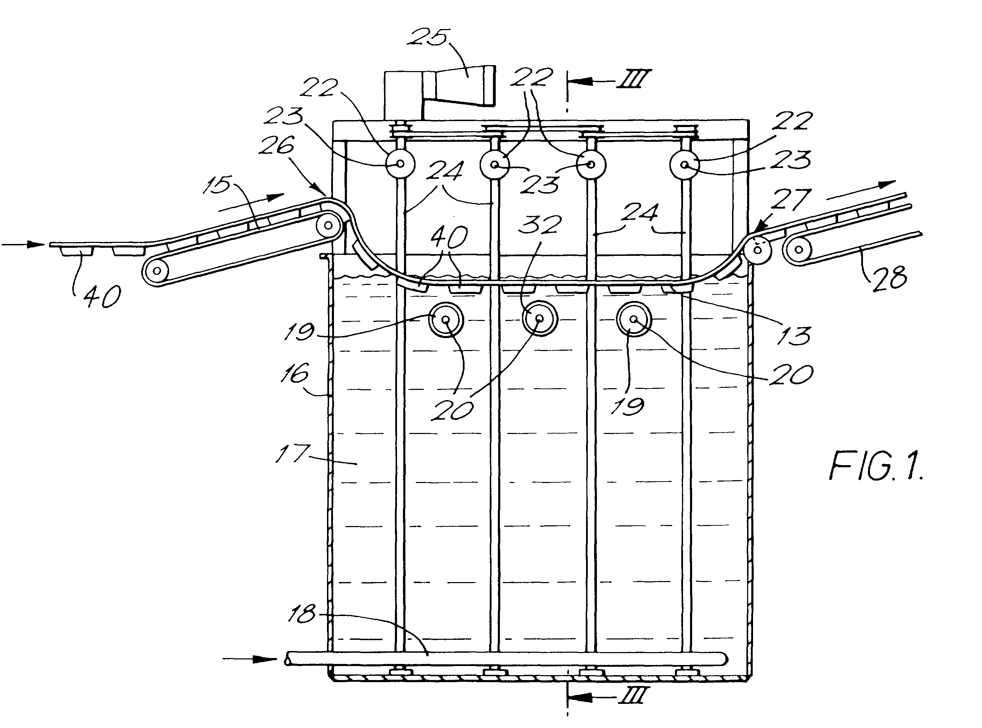

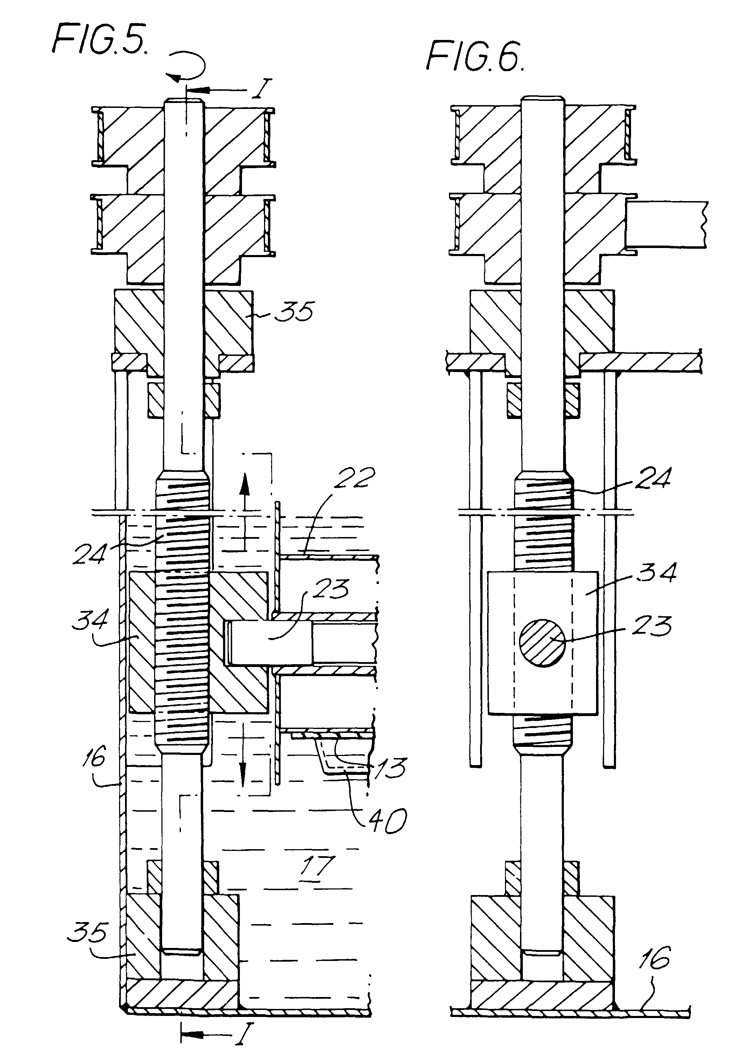

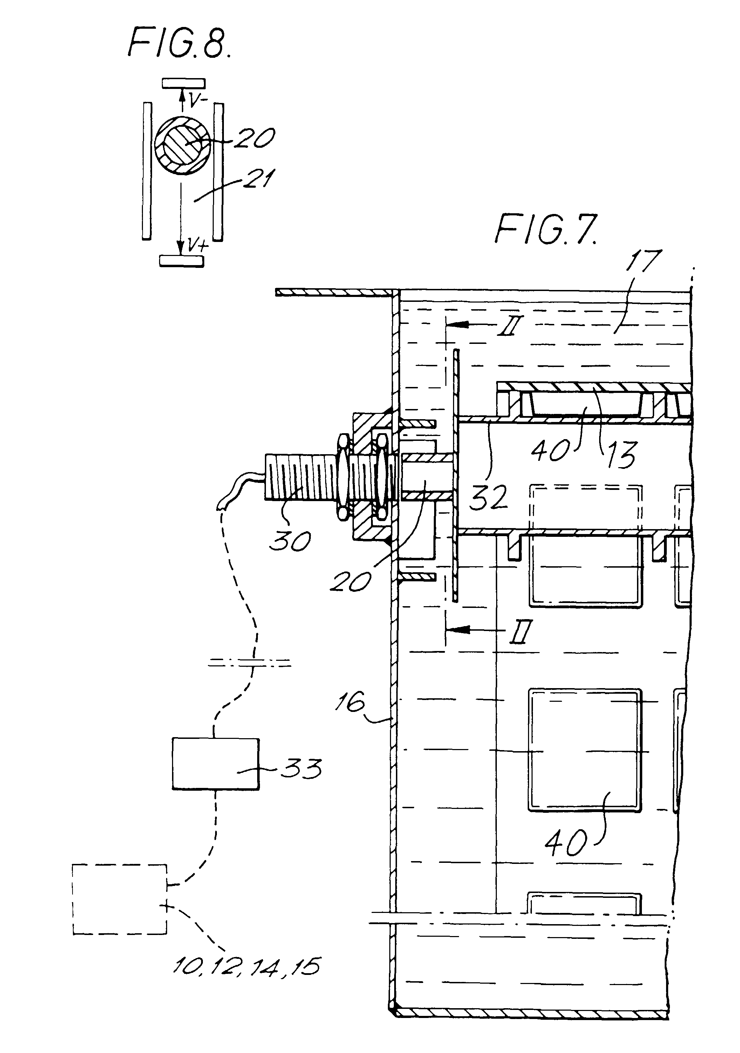

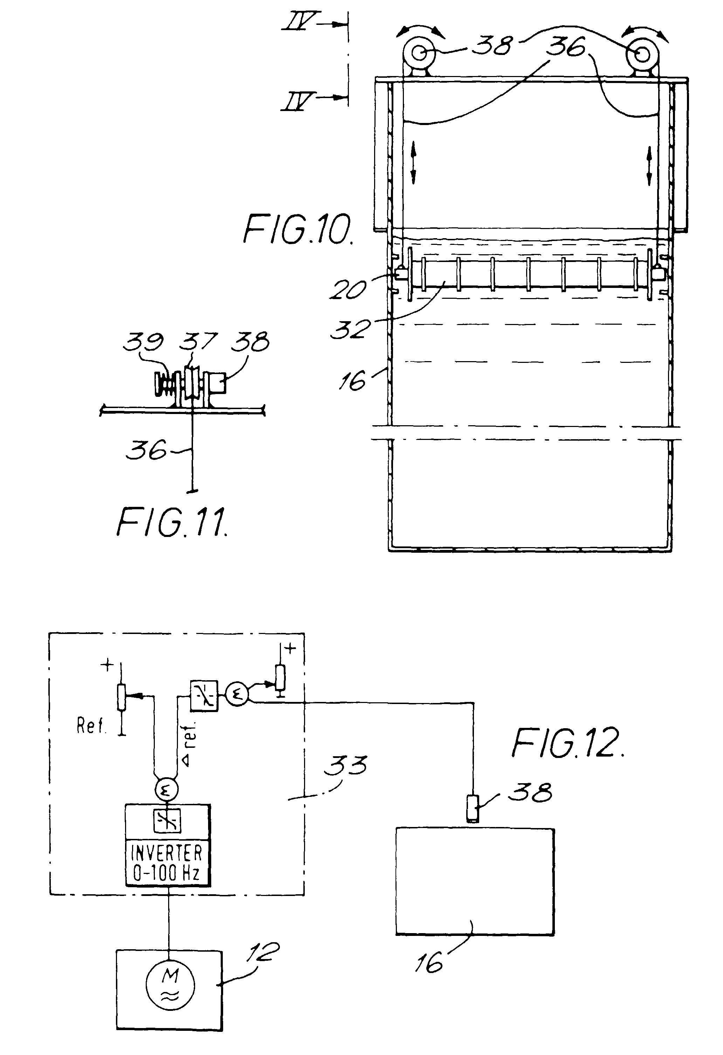

Referring to the drawings, a tank 16 for heat treatment of band 13 of packages 40 is shown in Fig. 1. The tank 16 containing water 17, a steam coil 18, substantially stationary rollers 19, 32 with shafts 20, capable of sliding in vertical grooves 21 (Fig 8), movable rollers 22 with shafts 23 fixed in threaded nuts 34 capable of reciprocating along threaded spindles 24 (Figs. 5 and 6) fixed to a wall of the tank by bearings 35 and which are rotated by an electric motor 25. The tank 16 is provided with an inlet 26 and an outlet 27 and beyond the outlet is an outlet conveyor 28. Fig. 7, 8 and 9 show an inductive sensor 30 in the vertical groove 21 close to the end of the shaft 20 of a stationary roller 32 with a speed regulator 33 for adjusting the speed of feed conveyor 15. Figs. 10, 11, and 12, show a wire 36 connecting the shaft 20 of roller 32 to a wheel 37 attached to an analogous sensor 38 with a torsion spring 39 to taut the wire 36.

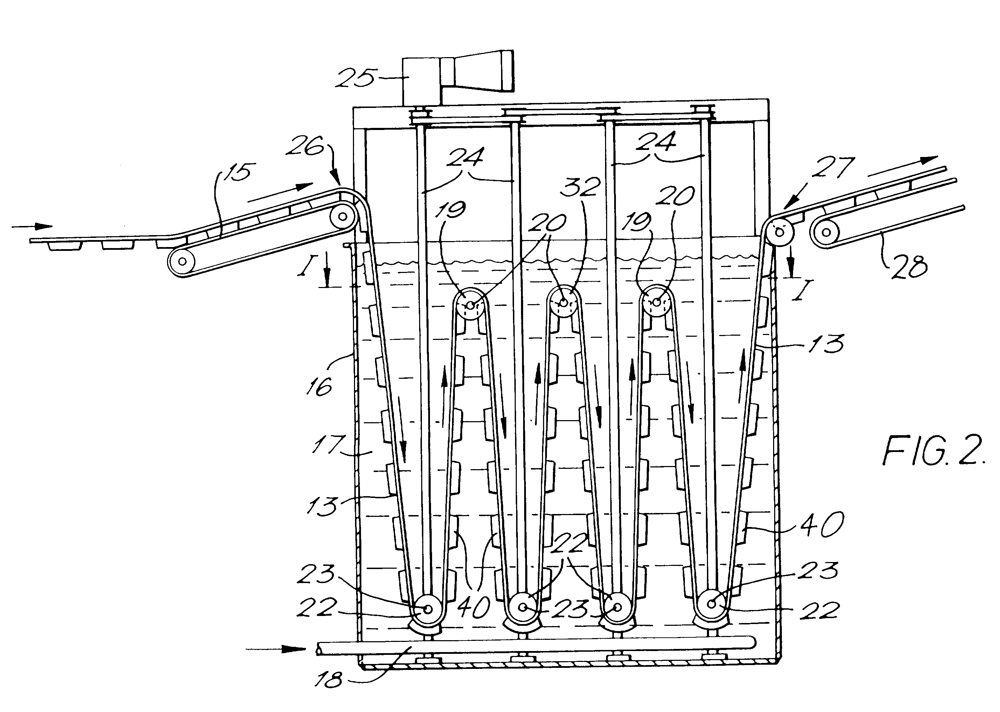

At the start of the loading, the movable rollers 22 in the tank 16 are in their upper position as shown in Fig. 1, and the leading end of the band 13 without packages is guided along the inlet conveyor 15 through the inlet 26 above the water surface in the tank 16, through the outlet 27 and placed on the outlet conveyor 28 which is stationary. The electric motor 25 is then switched on to rotate the threaded spindles 25. This lowers the movable rollers 22, by means of the shafts 23 fixed in the threaded nuts 34 which travel along the threaded spindles slowly into the tank 16 so that they guide the band 13 of packages 40 down into the water to travel in a vertical zigzag course underneath the movable rollers 22 and over the substantially stationary rollers 32. When the movable rollers have reached their lower position as shown in Fig. 2, the outlet conveyor is started at the desired running speed. If a shorter heat treatment time is required, it is possible to raise the movable rollers 22 from their lower position shown in Fig. 2 to any desired position, which results in a shorter courser of the band 13 of packages 40 through the tank 16.

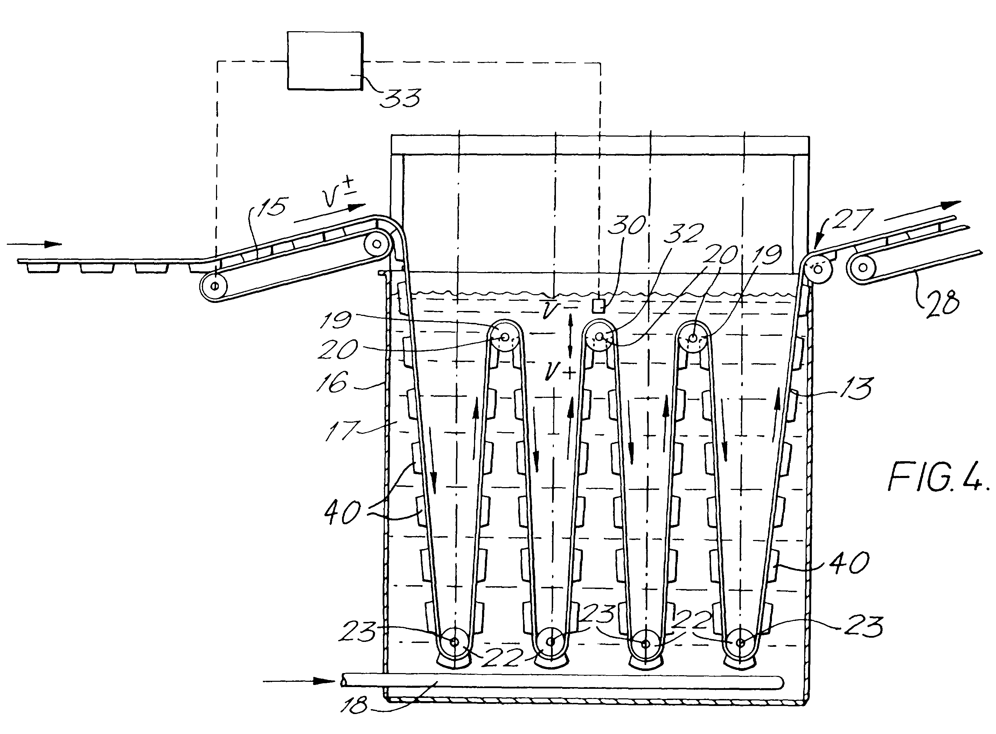

A control system is provided to ensure a controlled stretching in order to prevent an over stretching of the band of packages and thus minimising the risk for breakage of the band along weakening lines between the packages while it is travelling through the water. Said control system comprises an induction sensor 30 shown in Figs. 4, 7, 8 and 9 and an analogous sensor 38 which is shown in Figs. 10, 11 and 12 where the substantially stationary rollers 19, 32 are designed to have a density below 1.0, resulting in a tendency of rising in the water-filled tank 16. The roller shafts 20 are guided in vertical grooves 21 which allow a certain movement upwards and downwards. The rollers 32 are in embodiments illustrated designed to have a slightly higher density than the other rollers 19 so that if the band of packages becomes stretched, roller 32 will descend before roller 19. Roller 19 function as an extra safety device to prevent the band from breaking at extremely fast tension. In the embodiment illustrated in Figs. 4, 7, 8 and 9, the indication roller 32 when in its upper position actuates the sensor 30 which gives a signal to the speed regulator 33 to control the speed of the feed conveyor 15.

During its zigzag course through the tank, the band of packages travels above the rollers 19 and the indication roller 32 and when the outlet conveyor 28 pulls the band too much, the indication roller which is floating in the water will be pressed downwards before the roller 19 because of its higher density, and will descend until a certain level, at which it ceases actuating sensor 30. This sensor then interrupts its signal to the speed regulator 33 of the feed conveyor 15, which increases its speed until it reaches a pre-determined speed, higher than the speed of the outlet conveyor 28 and until the tension of the band of packages is released.

As the speed of the feed conveyor 15 is now higher than the speed of the outlet conveyor 28, there will soon be too long a band 13 of packages 40 in the tank, which makes the band slacken. The indication roller 32 will then ascend to a higher level, thereby actuating sensor 30 again, and this in turn gives a signal to the speed regulator 33 to decrease the speed of the feed conveyor to a lower, pre-determined speed. The indication roller 32, which is floating in the water, will thus be oscillating around the level "sensor actuated/not actuated". The duration of the oscillation is dependent on the inertia of the speed regulator of the inlet conveyor and on how the indication roller ascends in the water.

As indicated in Fig. 8, when the shaft 20 of the roller 32 is in the upper position in the groove 21, the speed V- is less than V, and when in the lower position, the speed V+ is greater than V. The approximate distance of the movement of the indication roller 32 in the groove 21 is 40 mm but, during operation, the distance will usually be within 10 mm.

In the embodiment illustrated in Fig. 10, 11 and 12, when the indication roller 32 ascends or descends, the taut wire 36 attached to the shaft 20 rotates the wheel 37 clockwise or anticlockwise thereby actuating the analogous sensor 38 according to control the speed of the feed conveyor 28 by means of speed regulator 33.

The system is thus based on a fixed speed, "v" of the outlet conveyor 28 placed beyond the outlet 27. To get an optimal stretching of the band of packages, its feeding speed is regulated by reducing or increasing the speed of the feed conveyor 15 by means of the indication roller 32 which is floating in the water. Also the substantially stationary rollers 19, 32 have a smoothing effect on possibly occurring tension of the band 13 of packages 40, as there are also floating in the water, thus being capable of moving a certain distance in a vertical direction.

## Claims

1. Tank for heat treatment of packages (40) comprising food material attached to one another in a band (13), said tank (16) comprising at least one substantially stationary roller (19, 32) and at least one movable roller (22) capable of being moved reciprocally vertically from a position above to a position below the substantially stationary roller (19, 32).

2. Tank according to claim 1, wherein a wall of the tank (16) is provided with guiding means (24, 34) which are adapted to guide shafts (23) of the movable rollers (22) as they reciprocate.

3. Tank according to claims 1 and 2, wherein the tank (16) further comprises means to adjust the lower end position of the movable roller.

4. Tank according to any of claims 1 to 3, wherein the substantially stationary roller (19, 32) and/or the movable roller (22) are/is provided with indentations for the engagement of a package (40) while it is being trained around the roller.

5. Tank according to any of claims 1 to 4, wherein the substantially stationary roller (19, 32) and/or the movable roller (22) are/is provided with projections along its periphery.

6. Tank according to any of claims 1 to 5, wherein the tank comprises a control system (12, 30, 33) comprising the substantially stationary roller (19, 32) having a density less than 1.0 and which is guided in to allow a certain small movement upwards and downwards, and at least one sensor device (30) adapted to automatically adjust the speed of the bands (13) of packages, depending on the position of the substantially stationary roller.

7. Tank according to claim 6, wherein the substantially stationary rollers (19, 32) are guided by having their shafts (20) positioned in vertical grooves (21).

8. Tank according to claim 6, wherein the control system is digital with an inductive sensor (30) adapted to detect the position of a substantially stationary roller.

9. Use of tank according to any of claims 1 to 8 for heat treatment of a band (13) of packages containing food material.

10. Process of heat treatment packages comprising food material wherein the packages (40) are attached to one another in a band (13), said process comprising conveying the band (13) of pouches through a tank (16) by passing the band (13) beneath at least one vertically movable roller (22) and above at least one substantially stationary roller (19, 32), and moving the movable roller downwards to a position below the substantially stationary roller to cause the band (13) to travel in a vertical zigzag course through the water (17).

## Patentansprüche

1. Becken zur Wärmbehandlung von Packungen (40), die Nahrungsmittel enthalten und in einem Band (13) miteinander verbunden sind, wobei das Becken (16) zumindest eine im wesentlichen stationäre Walze (19, 32) und zumindest eine bewegliche Walze (22) umfaßt, die aus einer oberen Stellung in eine Stellung unterhalb der im wesentlichen stationären Walze (19, 32) vertikal hin und her bewegt werden kann.

2. Becken nach Anspruch 1, bei dem eine Wand von dem Becken (16) mit Führungsmitteln (24, 34) ausgestattet ist, die zum Führen von Wellen (23) der beweglichen Walzen (22) geeignet sind, wenn sie sich hin und her bewegen.

3. Becken nach Anspruch 1 und 2, bei dem das Becken (16) desweiteren eine Vorrichtung zum Einstellen der unteren Endstellung der beweglichen Walze umfaßt.

4. Becken nach einem der Ansprüche 1 bis 3, bei dem die im wesentlichen stationäre Walze (19, 32) und/oder die bewegliche Walze (22) mit Vertiefungen für den Eingriff von einer Packung (40) ausgestattet ist/sind, wenn sie um die Walze herumgeführt wird.

5. Becken nach einem der Ansprüche 1 bis 4, bei dem die im wesentlichen stationäre Walze (19, 32) und/oder die bewegliche Walze (22) mit Vorsprüngen entlang ihres Umfangs ausgestattet ist/sind.

6. Becken nach einem der Ansprüche 1 bis 5, bei dem das Becken ein Steuersystem (12, 30, 33) umfaßt, das die im wesentlichen stationäre Walze (19, 32), die eine Dichte von weniger als 1,0 hat und geführt wird, um eine bestimmte kleine Bewegung nach oben und nach unten zu erlauben, und zumindest eine Sensoreinrichtung (30) aufweist, die geeignet ist, die Geschwindigkeit von den Bändern (13) von Packungen in Abhängigkeit der Stellung der im wesentlichen stationären Walze automatisch einzustellen.

7. Becken nach Anspruch 6, bei dem die im wesentlichen stationären Walzen (19, 32) dadurch geführt werden, daß ihre Wellen (20) in vertikalen Rillen (21) angeordnet sind.

8. Becken nach Anspruch 6, bei dem das Steuersystem digital ist, wobei ein induktiver Sensor (30) geeignet ist, die Stellung von einer im wesentlichen stationären Walze wahrzunehmen.

9. Verwendung eines Beckens gemäß einem der Ansprüche 1 bis 8 zur Wärmebehandlung von einem Band (13) von Packungen, die Nahrungsmittel enthalten.

10. Verfahren zur Wärmebehandlung von Packungen, die Lebensmittel enthalten, bei dem die Packungen (40) in einem Band (13) miteinander verbunden sind, wobei das Verfahren das Führen des Bands (13) von Beuteln durch ein Becken (16) durch Leiten des Bands (13) unter die zumindest eine vertikal bewegliche Walze (22) und über die zumindest eine im wesentlichen stationäre Walze (19, 32), und Bewegen der beweglichen Walze nach unten in eine Stellung unter der im wesentlichen stationären Walze umfaßt, um zu bewirken, daß das Band (13) in einem vertikalen Zickzackkurs durch das Wasser (17) verläuft.

## Revendications

1. Cuve pour traitement thermique de paquets (40) comprenant des denrées alimentaires, attachés les uns aux autres en une bande (13), ladite cuve (16) comprenant au moins un rouleau sensiblement fixe (19, 32) et au moins un rouleau mobile (22) pouvant se déplacer verticalement à va-et-vient d'une position qui se trouve au-dessus, à une position qui se trouve au-dessous, du rouleau sensiblement fixe (19, 32).

2. Cuve selon la revendication 1, dans laquelle une paroi de la cuve (16) est pourvue de moyens (24, 34) de guidage qui sont aptes à guider des axes (23) des rouleaux mobiles (22) alors qu'ils se déplacent à va-et-vient.

3. Cuve selon les revendications 1 et 2, dans laquelle la cuve (16) comprend en outre un moyen servant à régler la position d'extrémité inférieure du rouleau mobile.

4. Cuve selon l'une quelconque des revendications 1 à 3, dans laquelle le rouleau sensiblement fixe (19, 32) et/ou le rouleau mobile (22) sont/est pourvu(s) d'empreintes servant à engager un paquet (40) alors qu'il est entraîné autour du rouleau.

5. Cuve selon l'une quelconque des revendications 1 à 4, dans laquelle le rouleau sensiblement fixe (19, 32) et/ou le rouleau mobile (22) sont/est pourvu(s) de saillies le long de leur/sa périphérie.

6. Cuve selon l'une quelconque des revendications 1 à 5, dans laquelle la cuve comprend un système (12, 30, 33) de commande comprenant le rouleau sensiblement fixe (19, 32) ayant une densité inférieure à 1,0 et qui est guidé pour permettre un certain léger déplacement vers le haut et vers le bas, et au moins un dispositif (30) formant capteur apte à régler automatiquement la vitesse des bandes (13) de paquets, en fonction de la position du rouleau sensiblement fixe.

7. Cuve selon la revendication 6, dans laquelle les rouleaux sensiblement fixes (19, 32) sont guidés par le fait qu'ils comportent des axes (20) placés dans des rainures verticales (21).

8. Cuve selon la revendication 6, dans laquelle le système de commande est numérique avec un capteur inductif (30) apte à détecter la position d'un rouleau sensiblement fixe.

9. Utilisation d'une cuve selon l'une quelconque des revendications 1 à 8 pour le traitement thermique d'une bande (13) de paquets contenant des denrées alimentaires.

10. Traitement thermique de paquets comprenant des denrées alimentaires, dans lequel les paquets (40) sont attachés les uns aux autres en une bande (13), ledit traitement comprenant le transport de la bande (13) de sachets dans une cuve (16) en faisant passer la bande (13) au-dessous d'au moins un rouleau mobile verticalement (22) et au-dessus d'au moins un rouleau sensiblement fixe (19, 32), et en amenant le rouleau mobile vers le bas jusqu'à une position située au-dessous du rouleau sensiblement fixe pour amener la bande (13) à se déplacer selon un trajet en zigzag vertical dans l'eau (17).
